# EUROPÄISCHE PATENTSCHRIFT

(11) **EP 2 315 952 B1**
(45) Veröffentlichungstag und Bekanntmachung des Hinweises auf die Patenterteilung: **24.04.2013**
(21) Anmeldenummer: 09777650.4
(22) Anmeldetag: 05.08.2009
(51) Int. Cl.: F16B 37/04

(54) **VORRICHTUNG ZUM BEFESTIGEN EINES ANBAUTEILES AN EINEM TRÄGERTEIL**
DEVICE FOR MOUNTING AN ATTACHMENT PART TO A CARRIER PART
DISPOSITIF DE FIXATION D'UNE PIÈCE RAPPORTÉE SUR UNE PIÈCE PORTEUSE

(30) Priorität: 21.08.2008 DE 102008039108
(43) Veröffentlichungstag der Anmeldung: 04.05.2011
(73) Patentinhaber: A. Raymond et Cie, 38000 Grenoble (FR)
(72) Erfinder: ECKERT, Thomas, 79713 Bad Säckingen (DE); HULLMANN, Klaus, 79540 Lörrach (DE)
(74) Vertreter: RACKETTE Partnerschaft Patentanwälte
(86) Internationale Anmeldenummer: PCT/EP2009/005647
(87) Internationale Veröffentlichungsnummer: WO 2010/020342

(56) Entgegenhaltungen:
- EP-A- 0 930 440
- US-A- 5 873 690

## Beschreibung

Die Erfindung betrifft eine Vorrichtung zum Befestigen eines Anbauteiles an einem Trägerteil gemäß dem Oberbegriff des Patentanspruches 1.

Eine derartige Vorrichtung ist aus US-A-5,873,690 bekannt. Diese vorbekannte Vorrichtung zum Befestigen eines Anbauteiles an einem Trägerteil verfügt über eine mit einer Gewindestruktur ausgebildete Kopfplatte und über zwei Federarme, die an der Kopfplatte angeformt sind. Jeder Federarm weist einen mit der Kopfplatte verbundenen Außenschenkel und einen über einen Umbiegeabschnitt mit dem Außenschenkel verbundenen Innenschenkel auf. Die Innenschenkel sind einander gegenüber liegend angeordnet, wobei jeder Federarm an dem Innenschenkel auf der dem Umbiegeabschnitt abgewandten Seite einen Sperrschenkel aufweist, der sich in Richtung des Außenschenkels erstreckt. Jeder Außenschenkel weist zwei Anbindungsstege auf, die mit der Kopfplatte verbunden sind, wobei jeder Anbindungssteg fluchtend mit einem Außensteg des Außenschenkels verbunden ist. Zwischen den Außenstegen ist eine Blockierzunge ausgebildet, die sich mit ihrem freien Ende in Richtung der Kopfplatte erstreckt und seitlich nach außen über die Anbindungsstege übersteht. Bei dieser Vorrichtung stützt sich jeder Sperrschenkel an einer Blockierzunge ab und verhindert deren Einfedern nach innen.

Weiterhin ist eine Vorrichtung zum Befestigen eines Anbauteiles an einem Trägerteil aus der betrieblichen Praxis bekannt. Die vorbekannte Vorrichtung zum Befestigen eines Anbauteiles an einem Trägerteil verfügt über eine flache Kopfplatte, die mit einer Gewindestruktur ausgebildet ist, in die ein Befestigungselement in Gestalt einer Schraube einschraubbar ist. Weiterhin ist die vorbekannte Vorrichtung mit zwei Federarmen ausgebildet, die an der Kopfplatte angeformt sind. Jeder Federarm verfügt über einen mit der Kopfplatte verbundenen Außenschenkel und über einen über einen Umbiegeabschnitt mit dem Außenschenkel verbundenen Innenschenkel. Die Innenschenkel sind einander gegenüberliegend angeordnet und kommen bei Einschrauben des Befestigungselementes mit einem Schaft des Befestigungselementes in Kontakt, wodurch die Außenschenkel nach außen aufgebogen werden, um die Vorrichtung in einem Trägerteil zu verankern.

Der Erfindung liegt die Aufgabe zugrunde, eine Vorrichtung der eingangs genannten Art anzugeben, die sich bei verhältnismäßig geringen Einfügekräften durch relativ hohe Auszugskräfte auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung unter blockartiger Verspannung der Federarme die jeweils zwischen zwei an den Sperrschenkeln ausgebildeten Endzungen einfederbar angeordnet liegenden Blockierzungen in der Ebene der Außenstege mit einem Abstand der freien Enden von den Anbindungsstegen in Richtung der Kopfplatte erstrecken, sind die Auszugskräfte bei aufgrund freier Einfederbarkeit der Blockierstege weiterhin verhältnismäßig geringen Einfügekräften relativ hoch.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines bevorzugten Ausführungsbeispieles mit Bezug auf die Figuren der Zeichnung. Es zeigen:
- Fig. 1: in einer perspektivischen Ansicht ein Ausführungsbeispiel einer erfindungsgemäßen Vorrichtung,
- Fig. 2: in einer Schnittansicht das Ausführungsbeispiel gemäß Fig. 1 in einer Vormontageanordnung und
- Fig. 3: in einer Schnittansicht das Ausführungsbeispiel gemäß Fig. 1 in einer Endmontageanordnung.

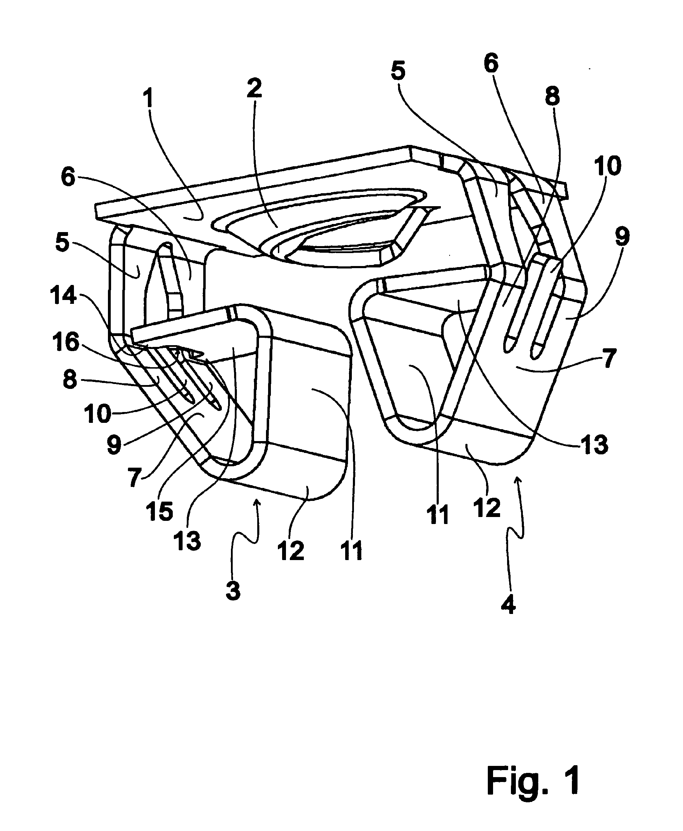

Fig. 1 zeigt in einer perspektivischen Ansicht ein als Stanz-BiegeTeil aus einem Metallblech hergestellte erfindungsgemäße Vorrichtung zum Befestigen eines Anbauteiles an einem Trägerteil. Die Vorrichtung gemäß Fig. 1 verfügt über eine flache, hier im wesentlichen quadratische Kopfplatte 1, in deren Mitte als Gewindestruktur eine Gewindeausprägung 2 ausgebildet ist. An zwei einander gegenüber liegenden Randseiten der Kopfplatte 1 sind ein erster Federarm 3 und ein zweiter Federarm 4 angeformt, die sich jeweils in der gleichen Richtung von der Kopfplatte 1 weg erstrecken. Jeder Federarm 3, 4 ist jeweils über einen ersten Anbindungssteg 5 und über einen zweiten Anbindungssteg 6 als Teile eines Außenschenkels 7 mit der Kopfplatte 1 verbunden.

Jeder Außenschenkel 7 weist einen ersten Außensteg 8 und einen zweiten Außensteg 9 auf, die jeweils mit einem Anbindungssteg 5, 6 verbunden sind.

Die Anbindungsstege 5, 6 erstrecken sich von der Kopfplatte 1 wegweisend nach außen. Die Außenstege 8, 9 erstrecken sich von dem Verbindungsbereich mit den Anbindungsstegen 5, 6 gegenüber diesen abgewinkelt aufeinander zu.

Zwischen den Außenstegen 8, 9 verfügt jeder Federarm 3, 4 über eine Blockierzunge 10, die sich in Richtung der Kopfplatte 1 erstreckt und mit einem Endabschnitt über die der Kopfplatte 1 zugewandten Enden der Außenstege 8, 9 vorsteht, so dass das freie Ende jeder Blockierzunge 10 auch seitlich über die Anbindungsstege 5, 6 übersteht.

Jeder Federarm 3, 4 ist weiterhin mit einem Innenschenkel 11 ausgebildet, der über einen Umbiegeabschnitt 12 mit dem der Kopfplatte 1 abgewandten Ende des Außenschenkels 7 verbunden ist. Jeder Innenschenkel 11 erstreckt sich von dem Umbiegeabschnitt 12 in Richtung der Kopfplatte 1. An dem dem betreffenden Umbiegeabschnitt 12 abgewandten Ende jedes Innenschenkels 11 ist ein Sperrschenkel 13 angeformt, der sich von dem dem Umbiegeabschnitt 12 abgewandten Ende des betreffenden Innenschenkels 11 bei diesem Ausführungsbeispiel in Richtung des Verbindungsbereiches zwischen den Anbindungsstegen 5, 6 und den Außenstegen 8, 9 erstreckt. Die Sperrschenkel 13 sind in etwa parallel zu der Kopfplatte 1 ausgerichtet und verfügen an ihren dem betreffenden Innenschenkel 11 abgewandten Ende über eine erste Endzunge 14 und über eine zweite Endzunge 15, die seitlich der Blockierzunge 10 angeordnet sind und zwischen denen eine Blockierzungenfreimachung 16 ausgebildet ist.

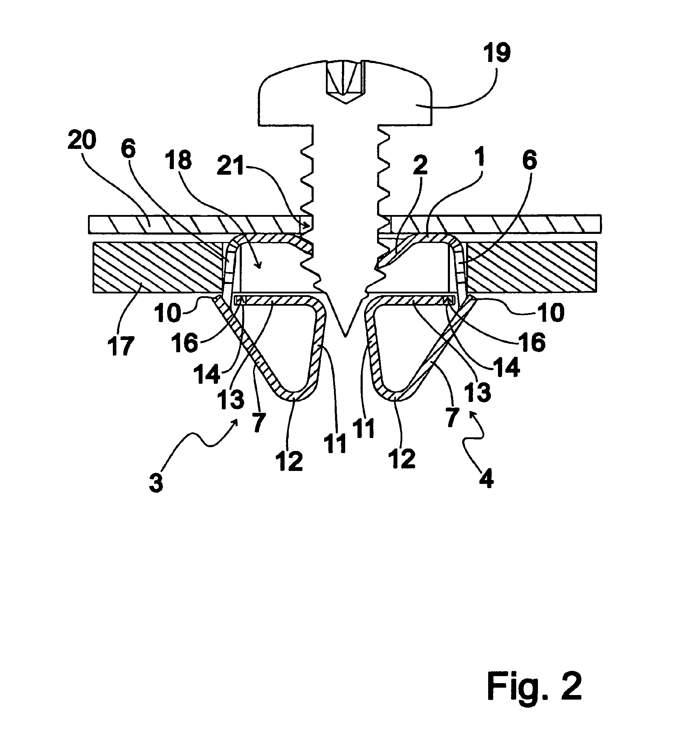

Fig. 2 zeigt in einer Schnittansicht das Ausführungsbeispiel gemäß Fig. 1 in einer Vormontageanordnung. In der Vormontageanordnung gemäß Fig. 2 ist die erfindungsgemäße Vorrichtung gemäß Fig. 1 in eine in einem Trägerteil 17 ausgebildete Trägerteilausnehmung 18 so weit eingefügt, dass die Blockierzungen 10 den der Kopfplatte 1 abgewandten Rand der Trägerteilausnehmung 18 hintergreifen. In die Gewindeausprägung 2 ist als Befestigungselement eine Schraube 19 eingeschraubt, die mit ihrem Schraubenschaft durch eine in einem Anbauteil 20 ausgebildete Anbauteilausnehmung 21 durchgreift.

Aus Fig. 2 ist ersichtlich, dass in der Vormontageanordnung der erfindungsgemäßen Vorrichtung die Innenschenkel 11 der Federarme 3, 4 einen Abstand voneinander aufweisen, der kleiner als der Nenndurchmesser des Schraubenschafts der Schraube 19 ist.

Aufgrund der Biegsamkeit der Außenschenkel 7 der Federarme 3, 4 radial nach innen lässt sich die erfindungsgemäße Vorrichtung mit verhältnismäßig geringen Einfügekräften in die Trägerteilausnehmung 18 einfügen.

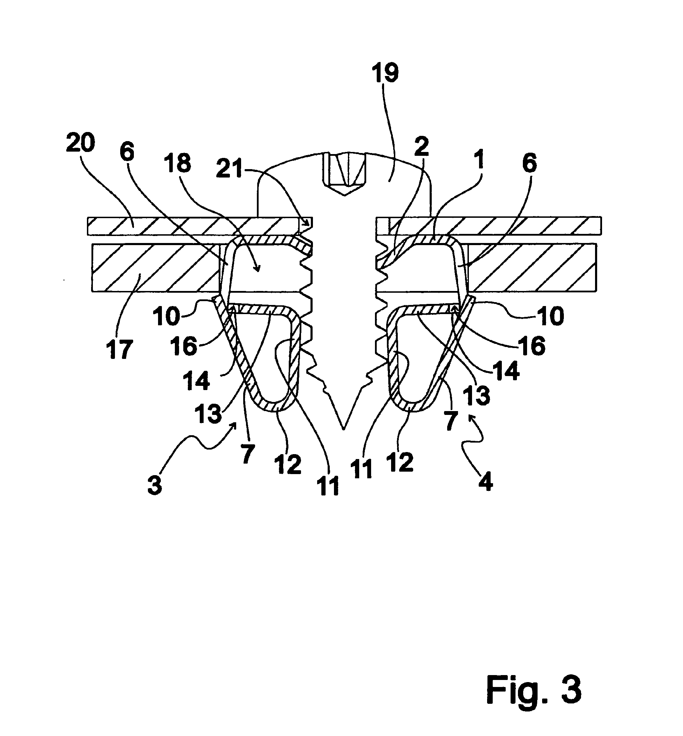

Fig. 3 zeigt in einer Schnittansicht das Ausführungsbeispiel gemäß Fig. 1 in einer Endmontageanordnung. In der Endmontageanordnung ist die Schraube 19 so weit in die Gewindeausprägung 2 eingedreht, dass ein Schraubenkopf der Schraube 19 auf der dem Trägerteil 17 abgewandten Seite des Anbauteiles 20 aufliegt und das Anbauteil 20 gegen die Kopfplatte 1 drückt. In dieser eingeschraubten Anordnung der Schraube 19 liegen die Innenschenkel 11 unetr Aufbiegen der Federarme 3, 4 radial nach außen an dem Schraubenschaft an, wobei durch das Einwirken der Sperrschenkel 13 auf die Außenschenkel 7 unter Anliegen der Endzungen 14, 15 an den Verbindungsbereichen zwischen den Anbindungsstegen 5, 6 und den Außenstegen 8, 9 die Krafteinleitung rechtwinklig zu der Wirkrichtung von Auszugskräften erfolgt und dadurch eine hohe Widerstandsfähigkeit gegen große Auszugskräfte erzielt ist.

## Patentansprüche

1. Vorrichtung zum Befestigen eines Anbauteiles (20) an einem Trägerteil (17) mit einer mit einer Gewindestruktur (2) ausgebildeten Kopfplatte (1) und mit zwei Federarmen (3, 4), die an der Kopfplatte (1) angeformt sind, wobei jeder Federarm (3, 4) einen mit der Kopfplatte (1) verbundenen Außenschenkel (7) und einen über einen Umbiegeabschnitt (12) mit dem Außenschenkel (7) verbundenen Innenschenkel (11) aufweist, wobei die Innenschenkel (11) einander gegenüber liegend angeordnet sind, wobei jeder Federarm (3, 4) an dem Innenschenkel (11) auf der dem Umbiegeabschnitt (12) abgewandten Seite einen Sperrschenkel (13) aufweist, der sich in Richtung des Außenschenkels (7) erstreckt, wobei jeder Außenschenkel (7) zwei Anbindungsstege (5, 6) aufweist, die mit der Kopfplatte (1) verbunden sind, wobei jeder Anbindungssteg (5, 6) mit einem Außensteg (8, 9) des Außenschenkels (7) verbunden ist und wobei zwischen den Außenstegen (8, 9) eine Blockierzunge (10) ausgebildet ist, die sich mit ihrem freien Ende in Richtung der Kopfplatte (1) erstreckt und seitlich nach außen über die Anbindungsstege (5, 6) übersteht, **dadurch gekennzeichnet, dass** die Blockierzunge (10) in der Ebene der Außenstege (8, 9) liegt und mit einem Endabschnitt über die der Kopfplatte (1) zugewandten Enden der Außenstege (8, 9) vorsteht, so dass das freie Ende jeder Blockierzunge (10) seitlich über die Anbindungsstege (5, 6) übersteht, und dass das freie Ende jedes Sperrschenkels (13) zwei Endzungen (14, 15) aufweist, die einem abgewinkelten Verbindungsbereich der Anbindungsstege (5, 6) und der Außenstege (8, 9) gegenüber liegend angeordnet sind und zwischen denen eine der Blockierzunge (10) gegenüber liegende Blockierzungenfreimachung (16) ausgebildet ist.

2. Vorrichtung nach Anspruch 1, **dadurch gekennzeichnet, dass** jeder Sperrschenkel (13) in etwa parallel zu der Kopfplatte (1) ausgerichtet ist.

## Claims

1. Device for fastening an added part (20) to a carrying part (17), having a top plate (1) which is formed to have a threaded structure (2) and having two resilient arms (3, 4) which are integrally formed with the top plate (1), each resilient arm (3, 4) having an outer limb (7) which is connected to the top plate (1) and an inner limb (11) which is connected to the outer limb (7) by a folded-round portion (12), the inner limbs (11) being arranged to be situated opposite one another, each resilient arm (3, 4) having on the inner limb (11), at the end remote from the folded-round portion (12), a clamping limb (13) which extends towards the outer limb (7), each outer limb (7) having two connecting webs (5, 6) which are connected to the top plate (1), each connecting web (5, 6) being connected to an outer linking part (8, 9) of the outer limb (7) and there being formed between the outer linking parts (8, 9) a retaining tongue (10) whose free end extends towards the top plate (1) and projects outwards laterally beyond the connecting webs (5, 6), **characterised in that** the retaining tongue (10) lies in the plane of the outer linking parts (8, 9) and an end portion thereof projects beyond those ends of the outer linking parts (8, 9) which are adjacent the top plate (1), the free end of each retaining tongue (10) thus projecting laterally beyond the connecting webs (5, 6), and **in that** the free end of each clamping limb (13) has two terminal tongues (14, 15) which are arranged opposite an angled region connecting the connecting webs (5, 6) and the outer linking parts (8, 9) and between which a means (16) for the release of the retaining tongue (10), which is situated opposite the retaining tongue (10), is formed.

2. Device according to claim 1, **characterised in that** each clamping limb (13) is aligned approximately parallel to the top plate (1).

## Revendications

1. Dispositif de fixation d'une pièce rapportée (20) sur une pièce porteuse (17) se composant d'une plaque formant tête (1) munie d'une structure définissant une amorce de filetage (2) et de deux pattes élastiques (3, 4) qui sont réalisées solidaires par formage de la plaque formant tête (1), dans lequel chaque pattes élastique (3, 4) est constituée par un segment extérieur (7) relié à la plaque formant tête (1) et par un segment intérieur (11) relié au segment extérieur (7) par une portion cintrée (12), les segments intérieurs (11) étant en l'occurrence respectivement opposés l'un à l'autre, dans lequel chaque patte élastique (3, 4) est munie, au niveau de son segment intérieur (11), sur con côté orienté à l'opposé de la portion cintrée (12), d'un segment de blocage (13), qui s'étend dans la direction du segment extérieur (7), dans lequel chaque segment extérieur (7) comporte deux barrettes entretoises de liaison (5, 6) qui sont reliées à la plaque formant tête (1), chaque barrette entretoise de liaison (5, 6) étant en l'occurrence reliée à une barrette extérieure (8, 9) du segment extérieur (7) et dans lequel il est prévu, entre les barrettes extérieures (8, 9), une languette de verrouillage (10), dont l'extrémité libre s'étend en direction de la plaque formant tête (1) et qui fait latéralement saillie vers l'extérieur au-dessus des barrettes entretoises de liaison (5, 6), **caractérisé en ce que** la languette de verrouillage (10) est disposée dans le plan des barrettes extérieures (8, 9) et que sa portion d'extrémité fait saillie au-dessus des extrémités, orientées vers la plaque formant tête (1), des barrettes extérieures (8, 9), ce qui fait que l'extrémité libre de chaque languette de verrouillage (10) fait saillie dans le plan latéral au-dessus des barrettes entretoises de liaison (5, 6) et **en ce que** l'extrémité libre de chaque segment de blocage (13) est munie de deux languettes terminales (14, 15) qui sont disposées à l'opposé d'une portion de raccordement repliée de manière angulaire des barrettes entretoises de liaison (5, 6) et des barrettes extérieures (8, 9) et entre lesquelles est ménagé un évidement d'insertion de la languette de verrouillage, dans une position opposée à la languette de verrouillage (10).

2. Dispositif selon la revendication 1, **caractérisé en ce que** chaque segment de blocage (13) est disposé selon une orientation sensiblement parallèle à la plaque formant tête (1).
